# EUROPEAN PATENT APPLICATION

(11) **EP 2 865 256 A1**
(43) Date of publication of application: **29.04.2015**
(21) Application number: 13190268.6
(22) Date of filing: 25.10.2013
(51) Int. Cl.: A01C 1/02, F26B 9/06, F26B 21/02, F26B 21/08, F26B 25/22

(54) **A humidity conditioning box, a method and a computer program product**

(71) Applicant: Rhino Research Europe B.V., 7122 JH Aalten (NL)
(72) Inventor: van Asbrouck, Johan Gaston Marie, 66000 Phichit (TH)
(74) Representative: Jansen, Cornelis Marinus

(57) **Abstract**

The invention relates to a humidity conditioning box (1), comprising a storage compartment (2) and a control compartment (3) mutually separated by a partitioning wall (4). The wall (4) is provided with an inflow opening (5) and an outflow opening (6). During operation of the box (1), the control compartment (3) houses zeolite particles (7) and an air flow device (8) arranged for inducing an air inflow from the control compartment (3) via the inflow opening (5) into the storage compartment (2) and an air outflow (6) from the storage compartment (2) via the outflow opening (6) into the control compartment (3).

## Description

### FIELD OF THE INVENTION

The invention relates to controlling a humidity level of goods or articles, e.g. for storing agricultural products such as seeds.

### BACKGROUND OF THE INVENTION

Seeds represent a high intrinsic value for people and other living beings on Earth. In view of annual seasons and other circumstances seeds have to be stored for a medium or a long term, preferably under ideal conditions involving requirements regarding humidity levels. In practice, climate rooms conditioned within a pre-determined temperature and humidity range are used to store seeds. However, both investment and operational costs for running conditioning climate rooms are rather expensive. Further, the reliability of climate rooms is doubtful, especially in third world countries due to a lack of efficient and reliable energy supply.

### SUMMARY OF THE INVENTION

It is an object of the present invention to provide a system that is arranged for efficiently conditioning a humidity level of goods or articles, e.g. for storing agricultural products such as seeds. Thereto, according to the invention, a humidity conditioning box is provided, comprising a storage compartment and a control compartment mutually separated by a partitioning wall that is provided with an inflow opening and an outflow opening, wherein, during operation of the box, the control compartment houses zeolite particles and an air flow device arranged for inducing an air inflow from the control compartment via the inflow opening into the storage compartment and an air outflow from the storage compartment via the outflow opening into the control compartment.

By providing a two-compartment air flow exchange box, an energy efficient humidity level control can be obtained. Further, since a relatively low energy supply is needed for operation of the humidity conditioning box, energy can be provided locally, e.g. from a battery or a solar cell, thereby rendering the box reliable in operation. Moreover, due to the simple construction, a relatively cheap solution is obtained for storing seeds.

The humidity conditioning box can also be applied for storing other valuable goods or articles such leatherwear.

The invention also relates to a method.

Further, the invention relates to a computer program product. A computer program product may comprise a set of computer executable instructions stored on a data carrier, such as a flash memory, a CD or a DVD. The set of computer executable instructions, which allow a programmable computer to carry out the method as defined above, may also be available for downloading from a remote server, for example via the Internet.

Further advantageous embodiments according to the invention are described in the following claims.

### DESCRIPTION OF THE DRAWINGS

By way of example only, embodiments of the present invention will now be described with reference to the accompanying figures, in which
Figure 1 shows a schematic cross sectional top view of a humidity controlling box according to the invention; and
Figure 2 shows a flow chart of steps of a method for drying seeds according to the invention.

It is noted that the figures show merely a preferred embodiment according to the invention.

### DETAILED DESCRIPTION OF THE INVENTION

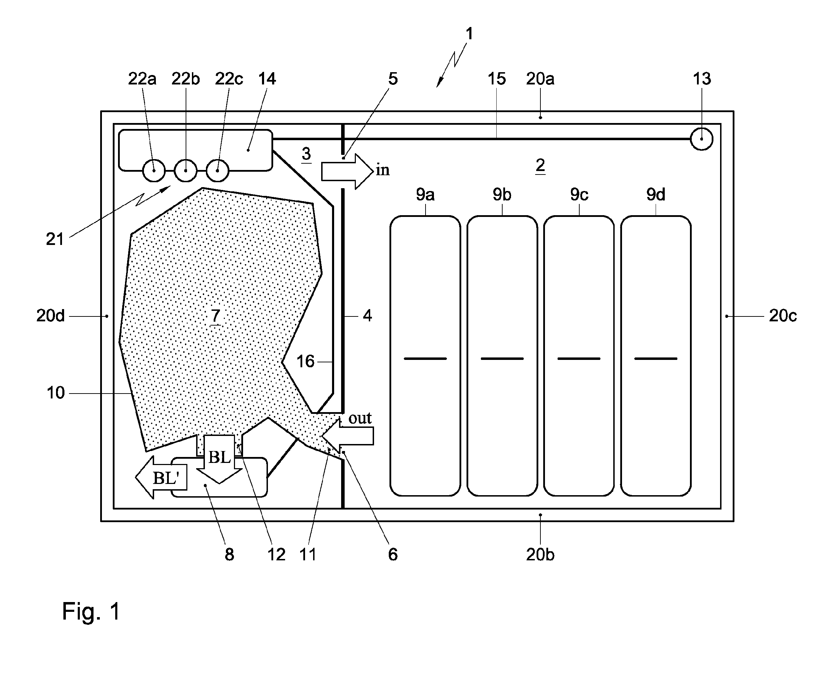

Figure 1 shows a schematic cross sectional top view of a humidity controlling box 1 according to the invention. The box 1 is arranged for preserving goods, e.g. seeds, within a well defined humidity range.

The box 1 comprises a storage compartment 2 and a control compartment 3 that are mutually separated by a partitioning wall 4. The compartments 2, 3 are surrounded by a first set of opposite side walls 20a,b and a second set of opposite side walls 20c,d. Preferably, the box also contains a top plate and a bottom plate so that the compartments 2, 3 are completely enclosed by the box walls and plates. The wall 4 is provided with an inflow opening 5 and an outflow opening 6. Further, the control compartment 3 houses zeolite particles 7, also called baeds, and an air flow device 8 implemented as a fan. The fan is arranged for inducing an air inflow IN from the control compartment 3 via the inflow opening 5 into the storage compartment 2 and an air outflow OUT from the storage compartment 2 via the outflow opening 6 into the control compartment 3.

Both the inflow opening 5 and the outflow opening 6 are provided with a one-way valve for minimizing an air backflow towards the control compartment 3 and the storage compartment 2, respectively. The inflow opening 5 and the outflow opening 6 are located in the partitioning wall 4 adjacent opposite side walls 20a,b, respectively, of the box 1, thereby optimizing the air circulation in the storage compartment 2 and the control compartment 3. However, in another embodiment, the inflow opening 5 and the outflow opening 6 can be located at other positions, e.g. closer to each other, or even more remote from each other.

Preferably, the box has been manufactured from an airtight material, such as a plastic material. However, in principle, also other materials can be used such as wood or foam.

Advantageously, the control compartment 3 in the shown embodiment is provided with a guiding structure guiding the air outflow OUT through the zeolite particles 7. Advantageously, the relatively humid air flowing into the control compartment 3 is dried by interacting with the zeolite particles 7. Further, dried air is flown as air inflow IN into the storage compartment 2, thereby effectively drying the storage compartment 2.

In the shown embodiment, envelopes 9a-d containing seeds are stored in the storage room 2 of the box 1. As an example, seeds of wheat, oat, corn (mais), barley, rye, millet, rice, soy can thus be stored at predefined humidity levels. However, also other products can be stored in the storage compartment 2 of the box 1 including potato, onions, vegetables, etc, or other humidity sensitive articles including non-agricultural goods such as leatherware or shoes.

The box 1 is provided with a door or hatch to provide access to the storage compartment 2 to put or remove goods or articles from said storage compartment 2. Similarly, the box 1 is provided with a door or hatch to provide access to the control compartment 2 in order to facilitate replacement of zeolite particles when they are saturated.

The above-mentioned guiding structure in the control compartment 3 includes a bag 10, preferably airtight or provided with fine perforations, containing the zeolite particles 7.

In the shown embodiment, the bag 10 is provided with an air inflow bag opening 11 connected to the outflow opening 6 of the partitioning wall 4. The bag 10 is also provided with an air outflow bag opening 12 positioned adjacent to the air flow device 8. The air flow device 8 is preferably connected to said air outflow bag opening 12 so that the fan is effectively arranged to suck air from the bag 10. Then, the outflow OUT from the storage room 2 is induced by sucking air from the bag 10, at the air outflow bag opening 12.

During operation of the air flow device 8, dry air from the bag 10 is blown into the control room 3 as a blown airflow BL, BL'. Due to overpressure, the dry air is pressurized, via the inflow opening 5, as an air inflow IN into the storage compartment 2. Then, the air outflow OUT, a flow through the bag 10, the blown airflow BL, BL', the air inflow IN, and a flow inside the storage compartment 2 towards the outflow opening 6 form a closed flow loop, drying the air in the storage compartment 2.

It is noted that the guiding structure may include further modules to guide the air flow OUT through the zeolite particles 7. As an example, an intermediate conduit may be connected between the outflow opening 6 in the partitioning wall 4 and the air inflow bag opening 11, and/or between the air outflow bag opening 12 and the air flow device 8. Further, a conduit may be provided between the air flow device 8 and the inflow opening 5 of the partitioning wall 4. It is also noted that modules of the guiding structure can be rigid or flexible. Also the bag can be rigid or flexible. By applying a flexible bag, the wall of the bag is forced to contact the zeolite particles 7, due to the underpressure in the bag 10 when the air flow device is running. Then, the drying effect on the air outflow OUT is optimized since the air flow is forced to flow along a maximum amount of zeolite particles 7.

It is further noted that, in principle, the control compartment 3 can also be provided without a guiding structure guiding the air outflow OUT through the zeolite particles 7. Then, the drying effect might be less. However, the box may have of simpler design and cheaper to manufacture.

In the shown embodiment, the box 1 is further provided with a humidity sensor 13 for sensing a humidity value in the storage compartment 2. Further, the box 1 comprises a control unit 14 receiving the sensed humidity value and driving the air flow device 8 in dependency of said sensed humidity value. Thereto, the humidity sensor 13 and the air flow device 8 are wired to the control unit 14 to enable mutual communication. The humidity sensor 13 may send an electric or electronic signal indicative of a sensed humidity value, via a first communication line 15, while the control unit 14 may send a driving signal towards the air flow device 8 to control operation of said device 8, via a second communication line 16. Alternatively, communication between the control unit 14, the humidity sensor 13 and the air flow device 8 is performed via wireless signals. The control unit 14, the humidity sensor 13 and the air flow device 8 are fed by an electric power supply such as a battery or the mains.

In the shown embodiment, the control unit 14 is arranged such that the air flow device 8 is driven if the sensed humidity value exceeds above a pre-determined maximum humidity level MAX. Further, the control unit 14 is arranged to stop driving the air flow device 8 if the sensed humidity value drops below a pre-determined minimum humidity level MIN. Then, the humidity level in the storage compartment 2 is in principle automatically maintained in a humidity range between the minimum and maximum humidity level MIN, MAX, preserving the goods or articles in the storage compartment 2 at a pre-determined humidity range. The pre-determined humidity levels MIN, MAX can be set by the user. Preferably, the user may also re-set these levels. Further, the levels can be pre-set by the manufacturer of the box with or without the option to modify the levels.

In another embodiment, only a minimum or maximum humidity level can be set by the user, while the control unit 14 then automatically selects the maximum or minimum humidity level, respectively, determined by taking into account a fixed humidity range value.

In principle, the box can also be provided without a control unit to control the air flow device 8 automatically. Then, the air flow device can e.g. be arranged for being switched on and off manually, e.g. depending on a degree of humidity sensed by a user or by a humidity sensor. Further, the air flow device can be arranged to be in constant operation, e.g. when an extremely low power air flow device is applied or when electrical power is locally easily available, and when no damage develops when drying the storage compartment 2 to low humidity levels.

Further, the shown box 1 comprises a monitoring unit, in the shown embodiment implemented as a display 21 including signalling LED's 22a-c. The monitoring unit 21 provides a signal indicative of a humidity status of the storage compartment 2 and a signal indicative of the saturation degree of the zeolite particles 7. A red LED 22a is switched on when the humidity sensor 13 measures a humidity value exceeding above the pre-determined maximum humidity level MAX, indicating that the humidity level in the storage compartment 2 is too high and that the storage compartment 2 is being dried. Generally, the fan 8 is operating. The red LED 22a is switched off and a green LED 22b is switched on when the humidity sensor 13 measures a humidity value that is lower than the pre-determined minimum humidity level MIN, indicating that the humidity level in the storage is under control. Generally, the fan 8 is then also switched off. Optionally, the display 21 includes a blue LED 22c that is indicative of the saturation degree of the zeolite particles 7. The blue LED 22c functions as a warning signal that is generated if
the sensed humidity value exceeds above the pre-determined maximum humidity level MAX for a time period longer than a pre-determined drying time period TDRY. Then, it is determined that the zeolite particles are in a high saturation degree and should be replaced by fresh zeolite particles.

It is noted that the display 21 of the box 1 may have another number of signalling LED's. Further, the LED's may have other colours.

In an advantageous embodiment, a battery status can be signalled by activating the signalling LED's 22, e.g. by driving the LED's in a flashing mode.

The term "zeolite" refers to a family of micro-porous hydrated aluminosilicate minerals. More than 150 zeolite types have been synthesized and 48 naturally occurring zeolites are known. Zeolites have an "open" structure that can accommodate a wide variety of cations, such as Na+, K+, Ca2+, Mg2+ and others. These positive ions are rather loosely held and can readily be exchanged for others in a contact solution. Some of the more common mineral zeolites are: Amicite, Analcime, Barrerite, Bellbergite, Bikitaite, Boggsite, Brewsterite, Chabazite, Clinoptilolite, Cowlesite, Dachiardite, Edingtonite, Epistilbite, Erionite, Faujasite, Ferrierite, Garronite, Gismondine, Gmelinite, Gobbinsite, Gonnardite, Goosecreekite, Harmotome, Herschelite, Heulandite, Laumontite, Levyne, Maricopaite, Mazzite, Merlinoite, Mesolite, Montesommaite, Mordenite, Natrolite, Offretite, Paranatrolite, Paulingite, Pentasil, Perlialite, Phillipsite, Pollucite, Scolecite, Sodium Dachiardite, Stellerite, Stilbite, Tetranatrolite, Thomsonite, Tschernichite, Wairakite, Wellsite, Willhendersonite and Yugawaralite, all of which are equally suitable for use in the present invention. An example mineral formula is: Na₂Al₂Si₃O₁₀-2H₂O, the formula for natrolite. Naturally occurring zeolites are rarely pure and are contaminated to varying degrees by other minerals, metals, quartz or other zeolites. For this reason, naturally occurring zeolites are less preferred in many applications where uniformity and purity are essential, yet such impure zeolites are very suitable for the present application.

The term zeolite includes reference to zeolite granules, zeolite beads and zeolite particles. Example of commercially available zeolites are; Linde Type A (LTA), Linde Types X and Y (Al-rich and Si-rich FAU), Silicalite-1 and ZSM-5 (MFI), and Linde Type B (zeolite P) (GIS). Other commercially available synthetic zeolites include Beta (BEA), Linde Type F (EDI), Linde Type L (LTL), Linde Type W (MER), SSZ-32 (MTT), BRZ® (clinoptilolite). All are aluminosilicates. Further, Linde type A zeolite (NaA, KA, CaA), also referred to by the three-letter code LTA (Linde Type A) zeolites, or the 3A, 4A and/or 5A type can be used. The size of the zeolite particles as used herein is not particularly limited in aspects of the present invention.

In all cases zeolites can take up water from moisture or water vapour in a gas. Zeolites can hold up to circa 55% or more of their weight in water. By choosing the pore size of the zeolite such that the pores are e.g. about 4 ångström, the zeolite is merely capable of absorbing water (H₂O), no other substances or at least hardly no other substances, thereby rendering the zeolite particles extremely apt and efficient for the purpose of absorbing water.

The term "seeds" refers to any live seed, e.g. live seeds that are used for the generation of progeny plants grown from the seeds when seeded, sowed or planted in or on a soil or suitable growth substratum. In fact, any seed can be used in the method of the invention. Particularly useful are seeds of wheat, oat, corn (mais), barley, rye, millet, rice, soy, rapeseed, linseed (flax), sunflower, carrot, black salsify, runner bean, goa bean, asparagus pea or winged bean, haricot bean, climbing bean or pole bean, snap bean, broad bean or field bean, garden pea or green pea, lupin, tomato, pepper, melon, pumpkin, cucumber, egg plant, zucchini, onion, leek, lettuce, endive, spinach, corn salad, gherkin, (red) cabbage, savoy cabbage, pointed cabbage, Chinese cabbage, pak-choi (bok choy), cauliflower, Brussels sprouts, sugar beet, beetroot, kohlrabi, chicory, artichoke, asparagus, broccoli, celeriac, celery, radish, grass and spices.

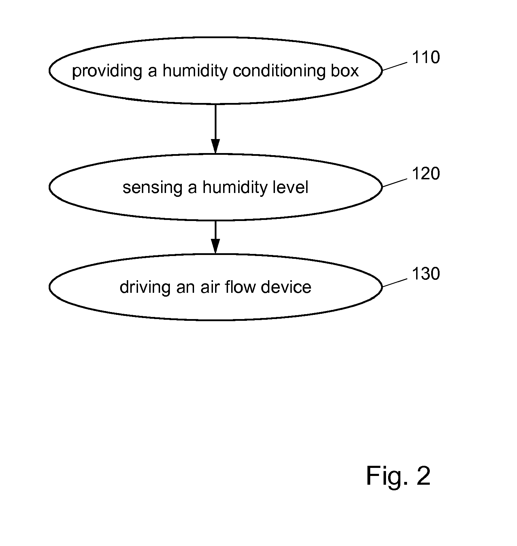

Figure 2 shows a flow chart of steps of a method according to the invention for controlling a humidity level. The method includes a step of providing 110 a humidity conditioning comprising a storage compartment and a control compartment separated from the storage compartment via a partitioning wall, the control compartment housing zeolite particles and an airflow device, a step of sensing 120 a humidity value in the storage compartment, and a step of driving 130 the air flow device in dependency of said sensed humidity value, inducing an air inflow from the control compartment into the storage compartment, and an air outflow from the storage compartment into the control compartment.

The step of driving the air flow device in dependency of said sensed humidity value can be executed using dedicated hardware structures, such as FPGA and/or ASIC components. Otherwise, the method can also at least partially be performed using a computer program product comprising instructions for causing a processor of a computer system or a control unit to perform the above described steps of the method according to the invention. All steps can in principle be performed on a single processor. However it is noted that at least one step can be performed on a separate processor. As an example, the step of providing a signal indicative of a saturation status of the zeolite particles can be controlled by a separate processor.

The invention is not restricted to the embodiments described above. It will be understood that many variants are possible.

It is noted that the monitoring module may provide optical signals indicative of storage compartment status information. Alternatively or additionally, the indicative signals have another physical character. As an example, the indicative signal is audible or electronic. Further, indicative signals can be forwarded, either wired or wireless to remote locations to warn users of the box.

It is further noted that the dimensions of the humidity conditioning box can vary from relatively small, e.g. such as the size of a shoe box, to relatively large, e.g. in the order of cargo container dimensions, or even larger. The humidity conditioning box can be either stationary, quasi-stationary or mobile, e.g. for travel purposes.

These and other embodiments will be apparent for the person skilled in the art and are considered to fall within the scope of the invention as defined in the following claims.

## Claims

1. A humidity conditioning box, comprising a storage compartment and a control compartment mutually separated by a partitioning wall that is provided with an inflow opening and an outflow opening, wherein, during operation of the box, the control compartment houses zeolite particles and an air flow device arranged for inducing an air inflow from the control compartment via the inflow opening into the storage compartment and an air outflow from the storage compartment via the outflow opening into the control compartment.

2. A box according to claim 1, wherein the inflow opening is provided with a one-way valve for minimizing an air backflow towards the control compartment, and wherein the outflow opening is provided with a one-way valve for minimizing an air backflow towards the storage compartment.

3. A box according to claim 1 or 2, wherein the control compartment is provided with a guiding structure guiding the air outflow through the zeolite particles.

4. A box according to claim 3, wherein the guiding structure includes a bag containing the zeolite particles, during operation of the box.

5. A box according to claim 4, wherein the bag is provided with an air inflow bag opening connected to the outflow opening of the partitioning wall, and an air outflow bag opening positioned adjacent to the air flow device sucking air from the bag.

6. A box according to any of the preceding claims, comprising a humidity sensor for sensing a humidity value in the storage compartment, further comprising a control unit receiving the sensed humidity value and driving the air flow device in dependency of said sensed humidity value.

7. A box according to claim 6, further comprising a monitoring unit, preferably a display, providing a signal indicative of a humidity status of the storage compartment and/or a signal indicative of the saturation degree of the zeolite particles.

8. A box according to any of the preceding claims, wherein the box has been manufactured from an airtight material, preferably a plastic material.

9. A box according to any of the preceding claims, wherein the inflow opening and the outflow opening are located in the partitioning wall adjacent opposite side walls, respectively, of the box.

10. A method for controlling a humidity level, the method including the steps of:
- providing a humidity conditioning box comprising a storage compartment and a control compartment mutually separated from the storage compartment via a partitioning wall, the control compartment housing zeolite particles and an airflow device;
- sensing a humidity value in the storage compartment, and
- driving the air flow device in dependency of said sensed humidity value, inducing an air inflow from the control compartment into the storage compartment, and an air outflow from the storage compartment into the control compartment.

11. A method according to claim 10, wherein the air flow device is driven if the sensed humidity value exceeds above a pre-determined maximum humidity level and/or wherein the air flow device is stopped if the sensed humidity value drops below a pre-determined minimum humidity level.

12. A method according to claim 10 or 11, further comprising a step of providing a signal indicative of a humidity status of the storage compartment and/or a signal indicative of the saturation degree of the zeolite particles.

13. A method according to claim 11 or 12, wherein a warning signal is provided if the sensed humidity value exceeds above a pre-determined maximum humidity level for a time period longer than a pre-determined drying time period.

14. A computer program product for controlling a humidity level in a storage compartment of a humidity conditioning box, the box comprising a control compartment separated from the storage compartment via a partitioning wall, the control compartment housing zeolite particles and an airflow device, the computer program product comprising computer readable code for causing a processor to perform the step of:
- driving the air flow device in dependency of a sensed humidity value in the storage compartment, inducing an air inflow from the control compartment into the storage compartment, and an air outflow from the storage compartment into the control compartment.
